Europäisches Patentamt

European Patent Office

Office européen des brevets

(19)

(11) Publication number : **0 496 566 A1**

## (12) EUROPEAN PATENT APPLICATION

(21) Application number : **92300484.0**

(22) Date of filing : **21.01.92**

(51) Int. Cl.⁵ : **B60R 21/24**

(30) Priority : **22.01.91 GB 9101429**

(43) Date of publication of application :
**29.07.92 Bulletin 92/31**

(84) Designated Contracting States :
**DE ES FR NL SE**

(71) Applicant : **DOWTY WOODVILLE POLYMER LIMITED**
**Alton Road**
**Ross-on-Wye Herefordshire HR9 5NF (GB)**

(72) Inventor : **Clarke, Martin George**
**71 Main Street, Kings Newton**
**Nr. Melbourne, Derbyshire (GB)**

(74) Representative : **Hogg, Jeffery Keith et al**
**Patents Dept., Dowty Group Services Limited,**
**Arle Court**
**Cheltenham, Gloucestershire GL51 OTP (GB)**

(54) **A vehicle crash bag.**

(57)   A vehicle crash bag comprises an outer envelope of an underside (1) and an overside (2) stitched together to form a joint (3). Both the underside (1) and overside (2) are made of a woven textile with the weave of the overside (2) being less permeable to gases than the underside (1). A barrier (8) is provided of polyimide film to protect the overside (2) and other vulnerable areas. By including a barrier (8) of low gas permeability the outer envelope may be made of a relatively high permeability material without the requirement of a rubber coating. The bag is then much more flexible and less bulky than conventional rubber coated fabric bags.

Fig. 1.

EP 0 496 566 A1

This invention relates to a vehicle crash bag, that is, a bag which is inflated to provide a restraining cushion between an occupant of the vehicle and some part of the vehicle against which the occupant might otherwise impact in a crash.

Crash bags have been used in motor vehicles to protect a driver from impacting on a steering wheel. In order to do this, the bag is stored in its deflated state in a hub of the steering wheel from where it can be deployed rapidly in the event of a crash. The deployment is achieved by the use of an electrically initiated gas generator which produces an inflating gas by a rapid combustion process. The gas produced is very hot, reaching a peak of about 300°C which can last for up to 10 milliseconds, and includes some burning combustion particles. The bag must therefore be made of a material which can resist high temperatures and prevent the hot gases and particles reaching the driver. In the past, rubberised fabrics have been used but they are bulky and therefore only suitable for use with steering wheels having a large hub to accommodate the bag until it is deployed.

According to the invention there is provided a vehicle crash bag adapted for use with a gas generator comprising an outer envelope and a barrier of low gas permeability and heat resistant material arranged within the outer envelope such that, in use, when the gas generator inflates the envelope, the envelope is protected from the heat produced by the gas generator.

By including a barrier of low gas permeability, the outer envelope may be made of relatively high permeability material, such as a woven nylon, without the requirement for a rubber coating to be applied to the envelope. The resulting crash bag is therefore much more flexible and less bulky, making it easier to pack than would otherwise be possible if an envelope of conventional rubber coated fabric were used.

The smaller packing size will enable the bag to be used in a wider range of vehicles than would otherwise be possible. A bag in accordance with the invention may be equally applicable for use in a small motor car having a small steerring wheel or a large motor car having a larger steerring wheel.

The barrier may be fixed to an inner surface of a portion of the envelope which, in use, will be closest to an occupant of the vehicle so as to prevent hot gases and harmful particles reaching the occupant.

Alternatively, the layer may be formed as an inner envelope of lower volumatic capacity than that of the outer envelope such that in use the inner envelope ruptures before the outer envelope is fully inflated. The gas produced by the generator is thus able to expand and hence cool before making contact with the outer envelope. The gases may then safely pass through the portion closest to the occupant because they will be cool enough not to cause injury. The inner envelope may have areas of weakness preformed in order to ensure it ruptures in a predictable fashion.

Specific embodiments of the invention will now be described with reference to the drawings in which:

Figure 1 shows a section through a crash bag in accordance with a first embodiment of the invention;

Figure 2 shows a section through a crash bag in accordance with a second embodiment of the invention; and

Figure 3 shows a third embodiment of the invention deploying.

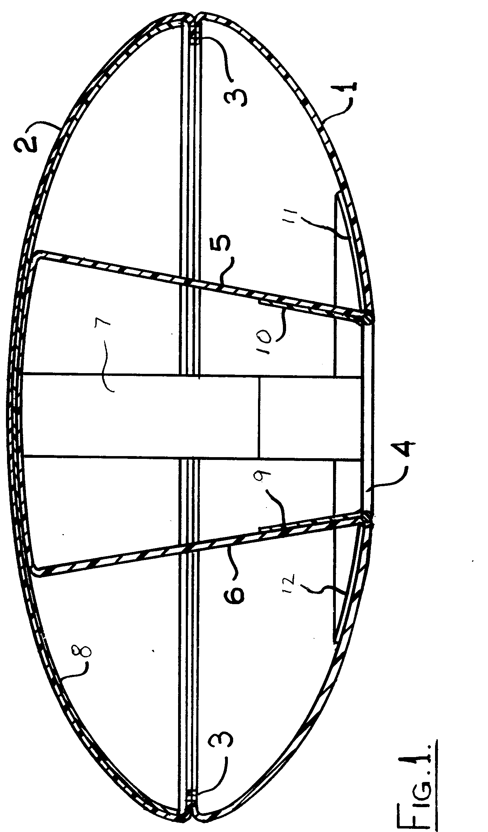

With reference to figure 1, a vehicle crash bag comprises an outer envelope of an underside 1 and an overside 2 stitched together to form a joint 3 which extends about the envelope's periphery. When deployed, as shown, the underside 1 will be closest to a steering wheel and the overside 2 will be adjacent a driver. Both the underside 1 and the overside 2 are made of a woven nylon textile but the weave of the overside 2 is tighter than the underside 1 to make it less permeable to gases. The underside 1 has a specific permeability to allow the bag to deflate in a controlled manner after deployment. It is necessary for the bag to deflate in a controlled manner in order that the driver is cushioned by the bag and not injured by impacting on an unyielding bag.

The bag is connected to a gas generator (not shown) by means of a sealing ring 4 which defines an inlet by means of which gas generated by the gas generator enters the bag. The gas generator contains a sodium azide propellant which is electrically initiated in the event of a crash. The gas is generated by a rapid combustion process and is therefore very hot and also contains burning combustion particles.

In order that the bag deploys in the correct shape there are provided four tether straps three of which 5, 6 and 7 are visible in the figure. These are 50 - 70 mm wide and are stitched into position on the overside 2 and the underside 1. The straps restrain the bag from forming a spherical shape.

A barrier 8 of polyimide film, sold by Dupont under their trade mark "Kapton", is applied to the inner surface of the overside 2 by stitching. This protects the overside 2 from the hot gases and combustion particles and prevents their escape from the envelope through the overside 2 because the film has a very low gas permeability. The film is also applied to vulnerable areas of the straps 5, 6 and 7 and the underside 1 to form barriers 9, 10, 11 and 12.

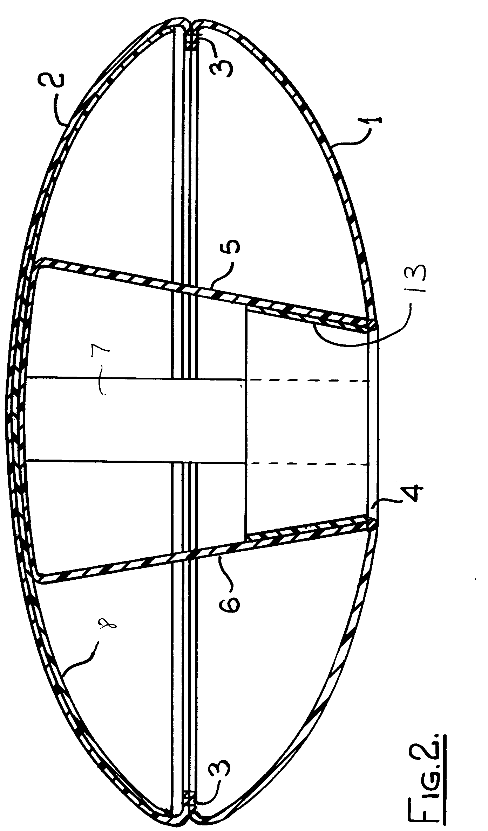

In a second embodiment of the invention shown in figure 2, the underside 1 and the vulnerable areas of the straps 5, 6 and 7 are protected by a tube of polyimide film 13. The overside 2 is again protected by the barrier 8.

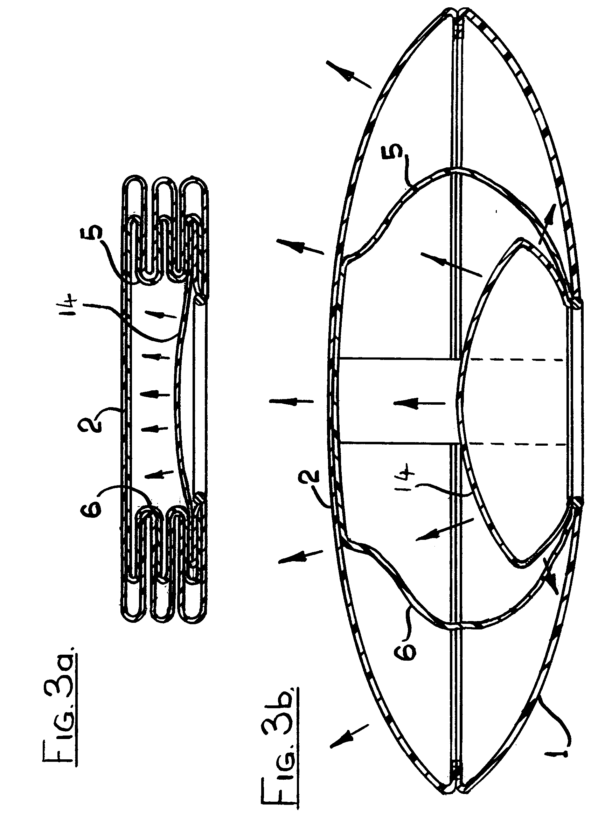

Figure 3 shows the deployment of a further embodiment of the invention in which the barrier comprises an inner envelope 14. The crash bag is stored in the steering wheel hub as shown in figure 3a and is pushed out as the inner envelope 14 inflates. By the time the inner envelope 14 is fully inflated, as shown in figure 3b, the gases have had time to cool by expansion. The combustion particles will have also cooled. The inner envelope 13 then ruptures along preformed weaknesses to allow the gas to fully inflate the outer envelope. The gas will have then cooled sufficiently to avoid damage to the outer envelope or injury to the occupant of the vehicle if it passes through the overside 2.

The crash bag may be used in many types of vehicles other than motor cars, for example, lorries and aircraft or in other circumstances where protection from rapid deceleration is required.

## Claims

1. A vehicle crash bag adapted for use with a gas generator comprising an outer envelope and a barrier of low gas permeability and heat resistant material arranged within the outer envelope such that, in use, when the gas generator inflates the envelope, the envelope is protected from the heat produced by the gas generator.

2. A vehicle crash bag as claimed in claim 1 wherein the barrier is fixed to an inner surface of a portion of the envelope which, in use, will be closest to an occupant of the vehicle so as to prevent hot gases and harmful particles reaching the occupant.

3. A vehicle crash bag as claimed in claim 1 wherein the barrier is formed as an inner envelope of lower volumatic capacity than that of the outer envelope such that in use the inner envelope ruptures before the outer envelope is fully inflated.

4. A vehicle crash bag as claimed in claim 7 wherein the inner envelope has areas of weakness preformed in order to ensure it ruptures in a predictable fashion.

5. A vehicle crash bag as claimed in any preceding claim wherein the barrier comprises a polyimide film.

EP 0 496 566 A1

FIG.1.

FIG.2.

EP 0 496 566 A1

Fig. 3a.

Fig. 3b.

**European Patent Office**

# EUROPEAN SEARCH REPORT

Application Number

EP 92 30 0484

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-2 152 635 (VOLKSWAGENWERK)<br>* page 2, line 11 - line 19 *<br>--- | 1,3,4 | B60R21/24 |
| X | DE-A-2 131 744 (NISSAN MOTOR)<br>* page 5, line 1 - line 18 *<br>--- | 1 | |
| X | GB-A-2 225 291 (GENERAL ENGINEERING)<br>* page 5, line 30 - page 6, line 8 *<br>--- | 1,2 | |
| X | FR-A-1 576 977 (EATON YALE & TOWNE)<br>* page 4, line 7 - line 42 *<br>--- | 1,2 | |
| A | DE-C-3 644 554 (DAIMLER-BENZ)<br>* claim 1 *<br>--- | 1,2 | |
| A | US-A-3 614 127 (GLANCE)<br>* column 2, line 36 - line 58 *<br><br>----- | 1 | TECHNICAL FIELDS SEARCHED (Int. Cl.5 )<br><br>B60R |

The present search report has been drawn up for all claims

| Place of search | Date of completion of the search | Examiner |
|---|---|---|
| BERLIN | 05 MAY 1992 | STANDRING M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)